(19) **Europäisches Patentamt**
**European Patent Office**
**Office européen des brevets**

(11) **EP 3 259 165 B1**

(12) **FASCICULE DE BREVET EUROPEEN**

(45) Date de publication et mention
de la délivrance du brevet:
**12.12.2018 Bulletin 2018/50**

(51) Int Cl.:
***B60W 50/00*** *(2006.01)*

(21) Numéro de dépôt: **16707845.0**

(86) Numéro de dépôt international:
**PCT/FR2016/050175**

(22) Date de dépôt: **28.01.2016**

(87) Numéro de publication internationale:
**WO 2016/132032 (25.08.2016 Gazette 2016/34)**

(54) **PROCEDE ET DISPOSITIF DE DETECTION D'UN CHANGEMENT DE COMPORTEMENT DE CONDUCTEUR D'UN VEHICULE AUTOMOBILE**

VERFAHREN UND VORRICHTUNG ZUM ERKENNEN EINER ÄNDERUNG DES VERHALTENS EINES FAHRERS EINES KRAFTFAHRZEUGS

METHOD AND DEVICE FOR DETECTING A CHANGE IN THE BEHAVIOUR OF A DRIVER OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2015 FR 1551400**

(43) Date de publication de la demande:
**27.12.2017 Bulletin 2017/52**

(73) Titulaire: **Renault S.A.S.**
**92100 Boulogne-Billancourt (FR)**

(72) Inventeurs:
• **AMEYOE, Ablamvi**
**78280 Guyancourt (FR)**
• **ILLY, Hervé**
**92190 Meudon (FR)**

• **CHEVREL, Philippe**
**44470 Carquefou (FR)**
• **LE CARPENTIER, Eric**
**44700 Orvault (FR)**
• **MARS, Franck**
**44400 Reze (FR)**

(56) Documents cités:
**EP-A1- 2 472 493          DE-A1-102006 060 849**
**DE-A1-102009 009 975**

• **WOLTER T-M ET AL: "EIN AUF FUZZY-METHODEN BASIERENDES SITUATIONS-HANDLUNGSMODELL DES FAHRERVERHALTENS", ATZ AUTOMOBILTECHNISCHE ZEITSCHRIFT, SPRINGER VIEWEG, DE, vol. 99, no. 3, 1 mars 1997 (1997-03-01), pages 142-147, XP000682346, ISSN: 0001-2785**

EP 3 259 165 B1

**Description**

L'invention concerne un procédé et un dispositif de détection d'un changement de comportement de conducteur d'un véhicule automobile. Le comportement du conducteur désigne ici son état comportemental dont peut résulter une façon de se comporter, en d'autres termes de réagir aux événements extérieurs. Un état de vigilance forte se traduit généralement par des facultés notamment d'anticiper et d'agir promptement, progressivement et efficacement. Un état de fatigue, de distraction ou d'énervement se traduit par une baisse de facultés du conducteur qui peuvent avoir des répercussions en termes anxiogènes pour les autres usagers, voire en termes d'accidents.

La détection d'un changement de comportement du conducteur est donc utile pour alerter le conducteur, voire pour agir directement sur le véhicule. Les constructeurs automobile ont pris conscience très tôt du besoin et ont proposé des procédés et dispositifs pour répondre à ce besoin, mais sans apporter entière satisfaction.

Les procédés de détection de la baisse de vigilance du conducteur peuvent être classés en deux grandes familles, la première par approche basée sur des mesures directes et la seconde par approche indirecte.

Dans l'approche basée sur des mesures directes, on peut citer :

- Les mesures de l'état physiologique du conducteur : fréquence cardiaque (électrocardiogramme), capteurs de l'activité cérébrale (électroencéphalogramme entre autres), l'électro-oculogramme, comme par exemple dans le document EP0699413.
- Les mesures de l'attitude du conducteur basées sur l'observation du conducteur : clignement des yeux (Perclos qui caractérise le degré d'ouverture, fermeture des yeux), orientation et mouvement de la tête, posture du conducteur assis sur son siège, comme par exemple dans le document EP2368496,
- Les mesures sur une réponse du conducteur à un événement préprogrammé comme par exemple dans les documents EP1957309 ou EP2512340.

L'approche basée sur des mesures directes présente de nombreux inconvénients comme par exemple ceux de la nécessité d'installer un appareillage supplémentaire dans le véhicule, parfois complexe et coûteux, ou encore ceux de se présenter particulièrement intrusifs sur la personne du conducteur. EP-A-2 472 493 divulgue un vecteur pour quantifier une donnée sensorimotrice "différence between target arzimuth angle and actual azimuth angle" et un un vecteur de sortie "actual steering angle" qui sont utilisés dans un modèle. DE 10 2006 060 849 A divulgue un vecteur d'entrée (DA, DB) et un vecteur de paramétrage (IA, IB),

L'approche basée sur des mesures indirectes permet d'éviter les inconvénients de la première. On peut citer :

- Les mesures d'actions du conducteur sur le véhicule : angle volant, couple volant, pédale d'accélérateur, de frein, d'embrayage et changement de rapport, actions secondaires sur les clignotants, IHM audio, navigation, téléphonie main libre, climatisation, sans provocation particulière du conducteur par le procédé ou par le dispositif comme par exemple dans les documents US8593288 ou US6061610.
- Mesure de la dynamique du véhicule : distance entre les véhicules, vitesse du véhicule, position du véhicule dans la voie, angle de cap, comme par exemple dans le document EP0952039.

C'est sur cette seconde approche que l'invention porte sa préférence.

Dans cette seconde approche, il est généralement nécessaire d'utiliser un jeu de paramètres qui est réglé une fois pour toute dans le véhicule, lors de la phase de mise au point du véhicule, et ce, quelques soient les conditions d'utilisation et le type de conducteur.

La difficulté de mise en oeuvre des procédés antérieurement connus dans le cadre de la seconde approche, consiste alors à trouver le bon jeu de réglage des paramètres permettant de détecter une baisse de vigilance du conducteur dans des situations multiples et variées, comme celles liées au type de conducteur et à son type de conduite, aux modifications de configurations routières (autoroute / route départementale, trafic dense / fluide) et aux modifications des caractéristiques du véhicule. Le compromis nécessaire pour satisfaire un maximum de situations possibles fait surgir l'inconvénient de ne pas avoir le bon jeu de réglage des paramètres dans chaque situation prévue, lequel est amplifié pour des situations qui peuvent surgir de façon non prévues ou pour lesquelles on ne possède pas nécessairement tous les éléments au moment de la conception puis des essais.

Pour remédier aux inconvénients de l'état antérieur de la technique, l'invention a pour objet un procédé de détection d'un changement de comportement de conducteur d'un véhicule automobile au moyen d'un modèle cybernétique défini par un premier vecteur de mesure en relation avec au moins une entrée connectée à un instrument de mesure pour quantifier une donnée sensorimotrice en relation avec le conducteur, par un vecteur de sortie comportant au moins une sortie pour estimer une donnée actionnelle produite par le conducteur, par un vecteur de paramétrage comportant au moins un paramètre pour quantifier une donnée physiologique du conducteur, et par un vecteur d'état temporel comportant au moins un état temporel dudit modèle, caractérisé en ce qu'il comprend des étapes exécutées en temps réel pour :

- calculer au moins une valeur courante optimale d'un vecteur d'état augmenté à un instant présent en fonction d'au moins une valeur précédemment estimée dudit vecteur d'état augmenté et d'un deuxième vecteur de mesure en relation avec ledit vecteur de sortie, ledit vecteur d'état augmenté comportant au moins une composante reproduisant une composante du vecteur d'état temporel et au moins une composante reproduisant une composante du vecteur de paramétrage ;
- évaluer un degré de stabilité d'au moins une composante de valeur courante du vecteur d'état augmenté qui reproduit ladite au moins une composante du vecteur de paramétrage ;
- signaler un changement de comportement de conducteur lorsque ledit degré de stabilité est significatif d'une instabilité.

Le modèle cybernétique du conducteur combiné à une identification en temps réel des paramètres du modèle conducteur permet un diagnostic de la vigilance conducteur (distraction notamment) adapté à chaque conducteur et à chaque configuration de véhicule qu'il conduit.

La variation au cours du temps de la valeur de ces paramètres, ou vitesse de variation des valeurs des paramètres du modèle, renseignent sur la modification du comportement du conducteur (distraction), et dans une moindre mesure, de changement de l'état de la route.

Par rapport à une technique d'identification classique telle que celles déjà divulguées dans la littérature, comme la méthode de prédiction d'erreur PEM (Prédiction Error Method en anglais), la technique enseignée par l'invention, permet d'identifier la valeur instantanée du paramètre. Le diagnostic peut donc se faire sur un pas de temps très court (temps réel), contrairement à la méthode PEM qui nécessite d'observer les signaux sur un intervalle de temps plus long. L'avantage est d'obtenir des résultats plus proches de la réalité puisque le comportement du conducteur associé à la valeur des paramètres du modèle, varie sur des pas de temps très court.

L'identification en temps réel permet de faire un diagnostic plus fidèle à la dynamique rapide de changement du comportement du conducteur

Particulièrement, le procédé comprend des étapes exécutées en temps réel pour calculer un gain de filtre bayésien à partir de la valeur précédemment estimée dudit vecteur d'état augmenté et dudit premier vecteur de mesure, le gain de filtre bayésien constituant un moyen technique de calcul de valeur courante du vecteur d'état augmenté.

De préférence, le procédé comprend des étapes exécutées en temps réel pour :

- générer un premier ensemble prédictif de sigma points associés au vecteur d'état augmenté, centrés sur la valeur précédemment estimée dudit vecteur d'état augmenté au moyen d'une matrice prédictive de covariance d'états statistiquement possibles;
- calculer un deuxième ensemble prédictif de sigma points associés au vecteur de sortie à l'instant présent en fonction du premier ensemble prédictif de sigma points et dudit vecteur de mesure;
- calculer le gain de filtre bayésien à partir du deuxième ensemble prédictif de sigma points.

Particulièrement aussi, le procédé comprend des étapes exécutées en temps réel pour calculer une valeur future estimée dudit vecteur d'état augmenté à un instant suivant à partir de la valeur courante optimale dudit vecteur d'état augmenté et dudit premier vecteur de mesure.

De préférence, le procédé comprend des étapes exécutées en temps réel pour :

- générer un premier ensemble optimal de sigma points associés au vecteur d'état augmenté, centrés sur la valeur courante optimale dudit vecteur d'état augmenté au moyen d'une matrice optimale de covariance d'états statistiquement possibles;
- calculer un deuxième ensemble optimal de sigma points associés au vecteur d'état augmenté à l'instant suivant en fonction du premier ensemble optimal de sigma points et dudit vecteur de mesure;
- calculer la valeur future estimée dudit vecteur à partir du deuxième ensemble optimal de sigma points.

Avantageusement, pour évaluer ledit degré de stabilité, le procédé comprend des étapes consistant à :

- obtenir une valeur du vecteur de paramétrage à partir du vecteur d'état augmenté à l'instant présent ;
- calculer une évolution de paramètres à partir de la valeur à l'instant présent et d'une valeur à l'instant précédent du vecteur de paramétrage ;
- mémoriser dans un registre à décalage ladite évolution de paramètres de manière à obtenir une quantité d'évolutions antérieures de paramètres;
- calculer un écart type sur ladite quantité d'évolutions ;

- signifier une instabilité dudit degré de stabilité lorsque ledit écart type n'est pas inférieur à un seuil prédéterminé.

L'invention a aussi pour objet un programme d'ordinateur comprenant des instructions de code de programme pour l'exécution des étapes du procédé lorsque ledit programme est exécuté sur un ordinateur.

L'invention a encore pour objet un dispositif de détection d'un changement de comportement de conducteur d'un véhicule automobile comprenant une unité de post traitement connectée à un ou plusieurs instruments de mesure pour quantifier une ou plusieurs données sensorimotrices en relation avec le conducteur, une unité de calcul connectée à l'unité de post traitement et hébergée dans un ordinateur embarqué qui comporte en mémoire un modèle cybernétique défini par un vecteur de mesure comportant au moins une entrée, par un vecteur de sortie comportant au moins une sortie pour estimer une donnée actionnelle produite par le conducteur, par un vecteur de paramétrage comportant au moins un paramètre pour quantifier une donnée physiologique du conducteur, et par un vecteur d'état temporel comportant au moins un état temporel dudit modèle, caractérisé en ce qu'il comprend en mémoire un programme selon l'invention et un processeur pour exécuter en temps réel ledit programme.

L'invention a enfin pour objet un véhicule comprenant un dispositif selon l'invention.

L'invention sera mieux comprise à l'aide d'exemples de réalisation d'un procédé et d'un dispositif conformes à l'invention en référence aux dessins annexés, dans lesquels :

- la figure 1 est une vue d'un véhicule auquel l'invention est applicable ;
- la figure 2 est une vue schématique du véhicule de la figure 1 évoluant sur une route ;
- la figure 3 est une vue schématique d'un dispositif particulier de mise oeuvre de l'invention ;
- la figure 4 est une vue schématique d'étapes de procédé conforme à l'invention ;
- la figure 5 illustre un modèle cybernétique de conducteur ;

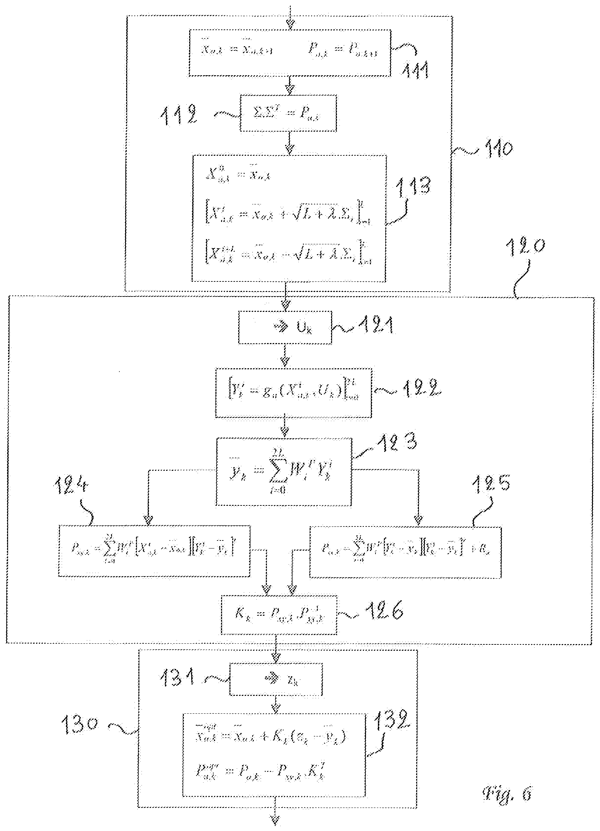

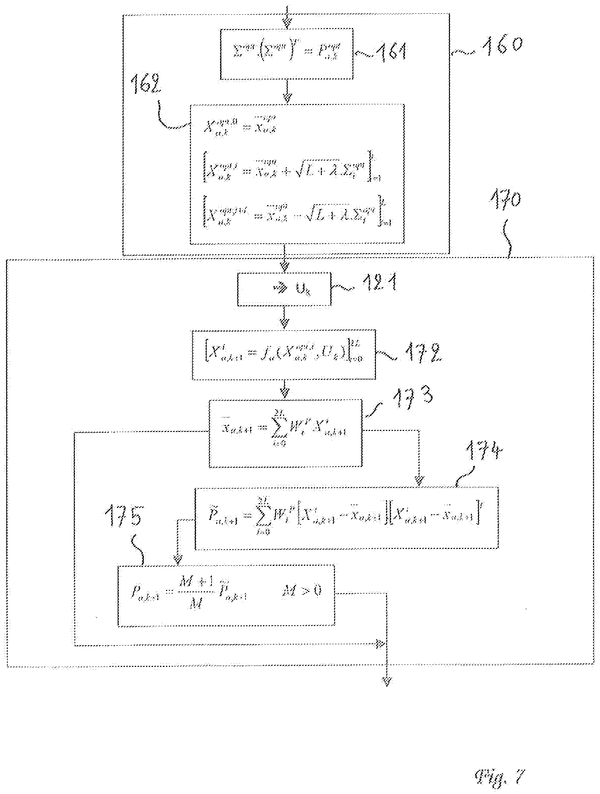

- les figures 6 à 8 montrent des étapes détaillées d'une réalisation possible de procédé conforme à l'invention.

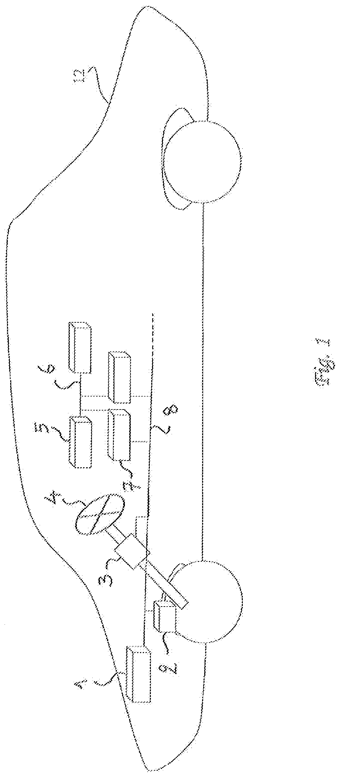

La figure 1 montre un véhicule 12 équipé de différents capteurs et actionneurs non nécessairement représentés pour conduire le véhicule de manière connue en soi par ailleurs. Une ou plusieurs caméras connectées à un calculateur embarqué 5, permettent de visualiser l'environnement du véhicule de manière comparable à ce que peut visualiser le conducteur à travers les vitres du véhicule ou pour aider le conducteur en relation avec des images qu'il ne peut pas visualiser directement. Le calculateur embarqué 5 est connecté à d'autres calculateurs au moyen d'un bus 6 de type CAN, LIN, Ethernet automobile ou de tout autre type connu dans le domaine des réseaux embarqués. Un calculateur embarqué 1 contrôle et commande différents actionneurs tels que par exemple le groupe motopropulseur et les freins en liaison avec les pédales d'accélération et de freinage à disposition du conducteur et/ou des capteurs de vitesse 2 disposés sur tout ou partie des roues 21, 22 du véhicule. Un calculateur embarqué 7, souvent nommé ordinateur de bord, est connecté au calculateur embarqué 1 et à d'autres calculateurs et capteurs au moyen d'un bus 8, souvent nommé bus véhicule, de type CAN, LIN, Ethernet automobile ou de tout autre type connu dans le domaine des réseaux embarqués. Parmi les signaux de capteurs transmis sur le bus 8, on peut citer une vitesse v du véhicule mesuré à partir du ou des capteurs de vitesse 2, un angle de rotation $\delta_d$ et un couple $\Gamma_d$ appliqués par le conducteur à un volant de direction 4.

Le dispositif de détection d'un changement de comportement de conducteur du véhicule 12 selon l'invention concerne notamment un véhicule automobile dans le sens où le comportement du conducteur ou du pilote a une influence directe sur celui du véhicule. Ce peut être aussi bien un véhicule nautique ou aéronautique qu'un véhicule terrestre.

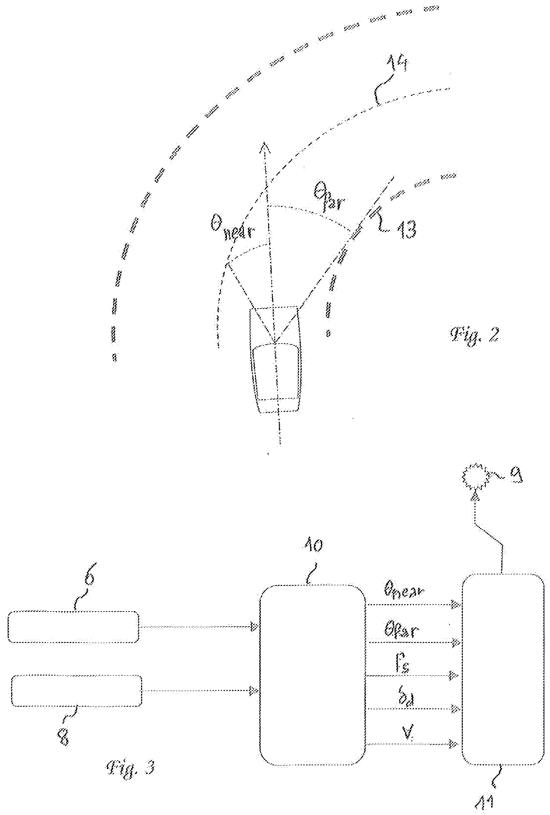

Lorsque le véhicule 12 se déplace par exemple sur une route, le conducteur apprécie généralement un angle de visée proche $\theta_{near}$ et un angle de visée lointain $\theta_{far}$, comme illustré par la figure 2. L'angle de visée proche est l'angle du champ de vision sous lequel le conducteur perçoit généralement la ligne médiane 14 de la chaussée. L'angle de visée lointain est l'angle fait entre la tangente à la ligne de direction du véhicule et la tangente à la courbure interne 13 de la chaussée. Lorsque la chaussée est rectiligne, la tangente à la courbure interne 13 est naturellement reportée à l'infini sur le point de fuite des bords de la chaussée. De manière plus générale, l'angle de visée lointain $\theta_{far}$ correspond à l'anticipation de la courbure de la route par le conducteur et l'angle de visée proche $\theta_{near}$ correspond au contrôle de position latérale effectué par le conducteur en se repérant sur un point proche.

L'exemple de réalisation du dispositif de détection d'un changement de comportement de conducteur selon l'invention illustré par la figure 3, est hébergé de manière centralisée dans le calculateur embarqué 7 ou de manière répartie dans plusieurs calculateurs 1, 5, 7.

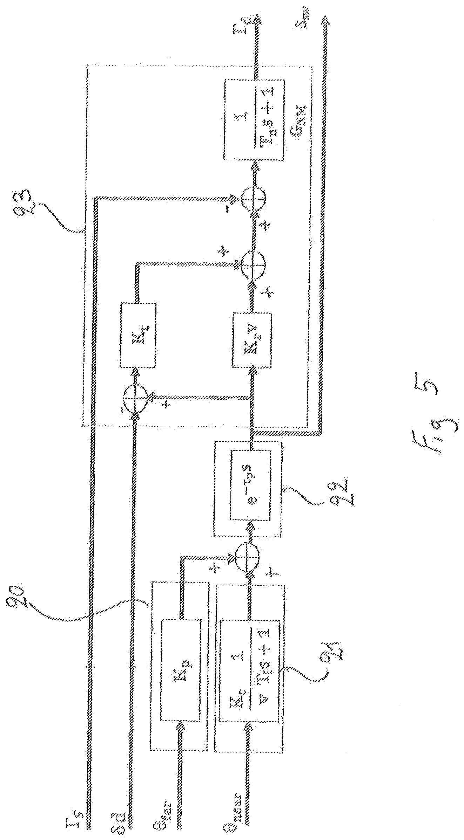

Le dispositif comprend notamment une unité 10 de post-traitement connectée aux bus 6, 8 pour y lire les signaux en provenance des capteurs 2, 3 et de la ou des caméras pour élaborer un vecteur U de mesures d'entrées et un vecteur Z de mesures de sorties en relation avec un modèle cybernétique expliqué dans la suite de la description en référence à la figure 5. On rappelle qu'au sens du traitement informatique, un vecteur de mesures est une liste ordonnée de variables dont la valeur de chacune est positionnée à partir du bus de données ou directement à partir d'un capteur. Le dispositif comprend aussi une unité 11 de calcul connectée à l'unité 10 de post-traitement pour recevoir le vecteur U de mesures d'entrées et le vecteur Z de mesures de sorties, de manière à générer une alarme 9 sous forme sonore, visuelle ou sous forme de message pour un signaler un changement de comportement du conducteur.

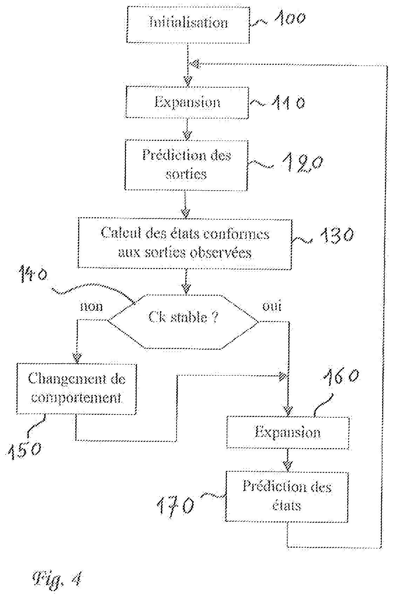

L'unité 11 de calcul est par exemple mais non nécessairement hébergée dans le calculateur ou ordinateur embarqué 7 qui comprend un processeur et, en mémoire un programme et des données pour l'exécution des étapes de procédé décrites ci-après en référence notamment à la figure 4. Des données variables d'entrée-sortie y sont réservées pour reproduire en temps réel le vecteur U de mesures d'entrées et le vecteur Z de mesures de sorties. Des données variables internes au programme y sont réservées pour mémoriser temporairement à chaque instant k ou sur une plage de temps déterminée, les valeurs nécessaires à l'exécution des étapes. Des données constantes y sont réservées pour mémoriser de manière permanente, les valeurs constantes nécessaires à l'exécution des étapes, notamment d'une étape d'initialisation 100.

La figure 5 illustre, à titre de pur exemple non limitatif, un modèle cybernétique possible du conducteur basé sur les connaissances des fonctions sensorimotrices de l'être humain. Le modèle cybernétique ici représenté comprend quatre entrées et une sortie principale. En entrées, le couple d'autoalignement $\Gamma_s$ qui traduit le couple exercé par le train avant sur la colonne de direction, l'angle de rotation du volant $\delta_d$, l'angle $\theta_{far}$ de visée à l'avant lointain du véhicule, et l'angle $\theta_{near}$ de visée à l'avant proche du véhicule, sont des données perceptibles par le conducteur, être humain pour agir sur le véhicule en fonction de son comportement. Le dispositif de détection de modification de comportement du conducteur, notamment l'unité de calcul 11 reçoit ces mêmes données à partir de mesures en temps réel comme expliqué en référence à la figure 3. En sortie principale, le couple conducteur $\Gamma_d$ est le couple que le conducteur est sensé appliquer sur le volant de direction en fonction des données d'entrée qu'il est sensé percevoir. Le dispositif de détection de modification de comportement du conducteur peut recevoir par ailleurs en temps réel une valeur de mesure du couple que le conducteur exerce effectivement sur le volant de direction, comme expliqué en référence à la figure 3.

Dans une variante de réalisation du dispositif de détection de distraction du conducteur, on peut aussi rajouter en sortie secondaire l'intention angulaire $\delta_{sw}$ du conducteur de tourner le volant de direction, dans le but de trouver des paramètres stabilisant lors d'une phase d'identification.

Sur la figure 5, la structure interne du modèle cybernétique comprend essentiellement quatre modules. Le module 20 modélise une anticipation visuelle au point tangent de la trajectoire en multipliant l'angle $\theta_{far}$ par un facteur de gain proportionnel $K_p$. Le module 21 modélise une compensation visuelle au point de visé devant le véhicule en divisant l'angle $\theta_{near}$ par la vitesse instantanée du véhicule et en le multipliant par un facteur de gain proportionnel $K_c$. à constante de temps $T_l$. Un module 22 introduit un délai à la somme des résultats obtenus en sortie des modules 20 et 21 pour intégrer le retard de traitement $\tau_p$ par le cerveau humain de façon à obtenir l'intention angulaire $\delta_{sw}$ du conducteur de tourner le volant de direction. Le module 23 modélise le système neuromusculaire humain qui transforme la consigne issue des traitements précédents en signal du couple $\Gamma_d$ en tenant compte des retours proprioceptifs que sont le couple d'autoalignement $\Gamma_s$ et l'angle volant $\delta_d$.

Plus précisément, le module 23 obtient l'image d'un couple utile pour atteindre la valeur d'intention angulaire $\delta_{sw}$ du conducteur en sommant deux termes. Un premier terme correspond à la valeur d'intention angulaire $\delta_{sw}$ du conducteur multipliée par la vitesse v du véhicule et par un coefficient de proportionnalité $K_r$. Un deuxième terme correspond à l'écart entre la valeur d'intention angulaire $\delta_{sw}$ du conducteur et l'angle volant $\delta_d$ scruté à chaque instant en temps réel, multiplié par un coefficient de proportionnalité $K_t$. Le couple d'autoalignement $\Gamma_s$ est alors retranché au couple utile de façon à obtenir une différence de couple qui est égale au signal du couple $\Gamma_d$ à une constante de temps $T_n$ près.

Les paramètres $K_p$ $K_c$ $T_l$ $\tau_p$ $K_r$ $K_t$ $T_n$ du modèle sont regroupés en mémoire dans un vecteur $\Pi = [K_p$ $K_c$ $T_l$ $\tau_p$ $K_r$ $K_t$ $T_n]$ qui est représentatif du comportement physiologique du conducteur. Les valeurs des paramètres qui viennent d'être mentionnés, sont généralement constantes pour un conducteur considéré dont elles quantifient le comportement. Toute modification constatée d'une ou plusieurs valeurs de ces paramètres, traduit un changement de comportement du conducteur, en d'autres termes un changement de façon de réagir aux événements. Le changement de comportement peut résulter d'une baisse de vigilance due par exemple à la fatigue, d'une distraction causée par un panneau publicitaire, un appel téléphonique ou par une recherche de station radio. Le changement de comportement peut résulter aussi d'une adaptation à des conditions particulières de circulation, par exemple dues à un mauvais état de la chaussée. Une particularité de l'invention réside dans la définition d'un vecteur à valeur variable $\Pi_k$ de paramétrage à chaque instant k d'exécution du procédé. L'unité de calcul 11 peut comprendre en mémoire une valeur constante $\Pi_0$ par défaut du vecteur de paramétrage du modèle, correspondant par exemple à des valeurs moyennes de paramètres obtenues préalablement sur un échantillon de conducteurs représentatifs.

L'objet du dispositif de détection de distraction du conducteur selon l'invention est de détecter cet éventuel changement de comportement du conducteur. Pour cela le dispositif de détection simule le modèle expliqué ci-dessus au moyen d'un vecteur d'état $x = [x_1$ $x_2$ $x_3]^T$. Chaque composante du vecteur d'état x(t) à l'instant t, a la valeur d'une variable d'état temporel du modèle :

$$x_1 = \frac{K_c}{v} \frac{1}{T_l s + 1} \, \theta_{near} \quad , x_2 = \frac{1}{1 + \frac{\tau_p}{2} s} \left( K_p \theta_{far} + x_1 \right)$$

et

$$x_3 = \frac{1}{T_n s + 1} \left[ -\Gamma_s - K_t \delta_d + \left( 1 - \frac{\tau_p}{2} s \right) (K_r v + K_t) x_2 \right]$$

On rappelle qu'une description mathématique du modèle de la figure 5, ou de tout autre modèle cybernétique, peut se faire en considérant une représentation linéaire de la forme :

$$\begin{cases} \dot{x} = f[x(t), u(t), \Pi] \, , \quad x(t_0) = x_0 \\ \qquad y = g[x(t), u(t), \Pi], \\ z(k) = y(k) + \mu(k), k = 1, \ldots, N \end{cases}$$

Avec $x = [x_1 \, x_2 \, x_3]^T$ le vecteur d'état de valeur initiale $x_0$ à $t = t_0$. Les vecteurs d'entrée et respectivement de sortie du modèle $u = [\theta_{far} \, \theta_{near} \, \Gamma_s \, \delta_d]^T$ et $y = [\Gamma_d \, \delta_{sw}]^T$ représentent respectivement le vecteur des entrées et le vecteur des sorties, $\Pi = [K_p \, K_c \, T_l \, \tau_p \, K_r \, K_t \, T_n]$ est le vecteur des paramètres du modèle considérés ici inconnus ou en d'autres termes des paramètres dont on cherche à identifier les valeurs. Les fonctions réelles f et g donnent respectivement d'une part une dérivée x du vecteur d'état par rapport au temps lorsque les paramètres sont considérés constants et d'autre part une valeur y estimée en sortie du modèle. Le vecteur z des sorties mesurées à chaque période d'échantillonnage pour laquelle k est l'index du temps discret, prend en compte un bruit de mesure $\mu$ qui a pour matrice de variance covariance R. Dans un souci d'alléger la description on nomme matrice de covariance toute matrice de variance covariance sachant que sur la diagonale de la matrice, la covariance exprime la variance. La matrice R ou $R_a$ est à coefficients invariants dans le temps.

En considérant les variables d'états relatives au modèle de la figure 5 :

$$x_1 = \frac{K_c}{v} \frac{1}{T_l s + 1} \, \theta_{near} \quad , x_2 = \frac{1}{1 + \frac{\tau_p}{2} s} \left( K_p \theta_{far} + x_1 \right)$$

et

$$x_3 = \frac{1}{T_n s + 1} \left[ -\Gamma_s - K_t \delta_d + \left( 1 - \frac{\tau_p}{2} s \right) (K_r v + K_t) x_2 \right]$$

La dérivée des variables d'état permet d'obtenir une expression analytique de la fonction f :

$$f[x(t), u(t), \Pi] = \begin{bmatrix} -\frac{1}{T_l} x_1 + \frac{K_c}{v T_l} \theta_{near} \\ \frac{2}{\tau_p} x_1 - \frac{2}{\tau_p} x_2 + 2 \frac{K_p}{\tau_p} \theta_{far} \\ \frac{-(K_r v + K_t)}{T_n} x_1 + 2 \frac{(K_r v + K_t)}{T_n} x_2 - \frac{1}{T_n} x_3 - \frac{K_t}{T_n} \delta_d - \frac{1}{T_n} \Gamma_s \end{bmatrix} ;$$

A partir de la structure du modèle de la figure 5 et des variables d'état définies ci-dessus, les sorties du modèles sont estimées comme suit :

$$\Gamma_d = x_3 \quad \text{et} \quad \delta_{sw} = -x_1 + 2x_2 - K_p \theta_{far}$$

L'expression analytique de la fonction g est déduite des équations des sorties :

$$g[x(t), u(t), \Pi] = \begin{bmatrix} x_3 \\ -x_1 + 2x_2 - K_p\theta_{far} \end{bmatrix}$$

Dans les rappels mathématiques présentés ci-dessus pour une meilleure compréhension de la suite de la description, le vecteur $\Pi$ des paramètres, est supposé connu et constant. Un système de base, linéaire en ses paramètres, vient ainsi d'être défini à partir du modèle de la figure 5. Il sert à estimer le vecteur d'état $x = [x_1\ x_2\ x_3]^T$ duquel sont déduites des estimations des mesures. Le système ici élaboré à partir d'un modèle cybernétique particulier qui, par ailleurs ne fait pas partie en soi de l'invention, sera bien entendu différent pour un autre modèle cybernétique avec un nombre différent d'entrées, un nombre différent de paramètres, un nombre différent d'états et un nombre différent de sorties. L'invention s'applique tout aussi bien à un simple régulateur PID (Proportionnel, Intégral, Dérivé).

La discrétisation à la période d'échantillonnage T est simplement effectuée par la méthode d'Euler ; en posant $x_k = x(kT)$:

$$x_{k+1} = f_d[x_k, u_k, \pi]$$

$$y_k = g[x_k, u_k, \pi],$$

Où $f_d([x_k, u_k, \pi]) = x_k + T\,f([x_k, u_k, \pi])$

Dans le but d'estimer aussi le vecteur $\Pi$ des paramètres, l'invention transforme le système de base, comme par exemple celui évoqué ci-dessus en un système augmenté.

Le système augmenté associé à la mise en oeuvre du modèle, est obtenu en augmentant la dimension du vecteur d'état X du système de base avec de nouvelles variables d'état extraites du vecteur paramètre $\Pi = [K_p\ K_c\ T_I\ \tau_p\ K_r\ K_t\ T_n]^T$

$$x_a = \begin{bmatrix} x \\ \Pi \end{bmatrix} ;$$ Avec $x = [x_1\ x_2\ x_3]^T$ (variables d'état du système initial)

$$x_a = [\ x_1\ x_2\ x_3\ K_p\ K_c\ T_I\ \tau_p\ K_r\ K_t\ T_n\ ]^T ;$$

En considérant que le vecteur paramètre $\Pi$ varie très peu, la dynamique du système augmenté est représentée par les équations suivantes :

$$\begin{cases} \dot{x}_a = \begin{bmatrix} \dot{x} \\ 0(7,1) \end{bmatrix} = f_a[x_a(t), u(t)] + w_a(t), \quad x_{a_0} = x_a(t_0) \\ y = g_a[x_a(t), u(t)], \\ z(k) = y(k) + \mu_a(k), k = 1, \dots, N \end{cases}$$

0(7,1) est une façon symbolique de représenter un vecteur à sept composantes nulles

$$f_a[x_a(t), u(t)] = \begin{bmatrix} f[x_a(t), u(t)] \\ 0(7,1) \end{bmatrix} \text{ Et } g_a = g$$

Avec $\mu_a$ bruit de mesure du système augmenté de covariance $R_a$. Nous venons ainsi de définir les éléments du modèle utiles pour mettre en oeuvre du procédé expliqué maintenant en référence à la figure 4.

L'étape 100 d'initialisation consiste à affecter pour un instant initial d'indice k=0, des valeurs constantes contenues en mémoire aux variables internes du procédé amenées à évoluer à chaque instant k ultérieur.

Une valeur $\overline{x}_{a,k+1}$ du vecteur d'état augmenté, prédite pour l'instant suivant, est initialisée par la formule $\overline{x}_{a,k+1} = x_{a\_0}$ où $x_{a\_0}$ est un vecteur à L composantes par exemple toutes égales à 0,5. A titre purement illustratif et non limitatif pour le modèle exposé ci-dessus avec un vecteur d'état de base à trois composantes et un vecteur de paramètres à sept composantes, L=10. On peut donner aussi aux sept dernières composantes initiales du vecteur des paramètres, des valeurs préalablement définies expérimentalement.

La valeur $P_{a\_k+1}$ de la matrice de covariance augmentée de la prédiction de l'état du système à l'instant k+1, notamment en statistique d'ordre 2, est initialisé par la formule $P_{a\_k+1} = P_{a\_0}$ où $P_{a\_0}$ est une matrice à LxL composantes par exemple toutes égales à 0,1 sur la diagonale à une ou deux exceptions près basées sur l'expérience, et toutes nulles en dehors de la diagonale.

La valeur $R_{a\_k}$ de la matrice de covariance augmentée du bruit de mesure est initialisé par la formule $R_{a\_k} = R_{a\_0}$ où, pour un vecteur de sortie à deux composantes, $R_{a\_0}$ est une matrice à 2x2 composantes par exemple toutes inférieures à 0,001 sur la diagonale en se basant sur l'expérience et/ou les spécifications des organes de mesure, et toutes nulles en dehors de la diagonale. On peut prendre aussi une valeur constante $R_a$ pour la matrice de covariance augmentée du bruit de mesure qui est alors accédée directement en mémoire au cours de l'exécution des étapes sans besoin de la positionner dans l'étape d'initialisation.

Les autres grandeurs qui gardent une valeur constante au cours du temps sont simplement stockées en mémoire permanente sans avoir à être initialisées dans l'étape 100. Le nombre L de composantes du vecteur d'état augmenté est égal à la somme du nombre d'états temporels du modèle cybernétique et du nombre de paramètres du modèle ajoutés. Un facteur d'échelle λ a été déterminé de manière heuristique pour optimiser les temps de calcul, notamment en termes de convergence, la valeur retenue est À=3-L, d'autres valeurs de λ peuvent être retenues sans sortir du cadre de l'invention. Le facteur d'échelle λ sert entre autre mais non uniquement comme nous le verrons par la suite, à calculer des coefficients de pondération $W_i^P$, i variant de 0 à 2L, au moyen des formules suivantes :

Pour i=0, $W_0^P = \lambda/(L+\lambda)$ et pour i variant de 1 à 2L, $W_i^P = 1/2(L+\lambda)$. Les coefficients de pondération dont la somme est égale à l'unité, sont des constantes qui peuvent être stockées en mémoire permanente ou calculées dans l'étape d'initialisation à partir du facteur d'échelle λ.

Le facteur d'oubli M est une constante positive qui traduit un nombre d'itérations antérieures prises en compte et qui est utilisé pour renforcer la confiance sur les prédictions.

L'ajout des paramètres dans le vecteur d'état augmenté peut avoir pour effet d'introduire, sauf à de rares exceptions près, des non linéarités dans le système augmenté, notamment dans celui évoqué ci-dessus du fait des multiplications qui en résultent.

L'étape d'expansion 110 résout le problème de non linéarité en utilisant une méthode de calcul associée à la statistique en relation avec une variable aléatoire soumise à des évolutions non linéaires, connue sous le nom de transformée «Unscented» ou transformée sans odeur en français, peut-être en raison de son caractère éphémère. On peut se dispenser de l'étape 110 lorsque l'ajout des paramètres du modèle aux états temporels du modèle pour obtenir le vecteur d'état augmenté, conserve un traitement linéaire.

Le vecteur d'état augmenté est vu dans l'étape 110 comme une variable aléatoire $X_a$ de dimension L, de moyenne $\overline{X}a$ et de covariance $P_a$, qui subit une transformation non linéaire de la forme Y = g(Xa). La transformée unscented permet d'approcher la moyenne $\overline{Y}$, la covariance $P_{yy}$ de Y, ainsi que la covariance $P_{xy}$ croisée de $X_a$ et de Y.

On peut détailler l'étape 110 en trois étapes 111, 112, 113.

L'étape 111 consiste essentiellement à affecter aux valeurs courantes à l'instant k, $\overline{x}_{a,k}$ du vecteur d'état augmenté prédit et $P_{a,k}$ de la matrice de covariance de la prédiction d'état, les valeurs $\overline{x}_{a,k+1}$ du vecteur d'état augmenté précédemment prédit et $P_{a,k+1}$ de la matrice de covariance de la prédiction d'état précédemment considérées comme étant celles de l'instant k+1 suivant, soit dans l'étape initiale 100 lors de la première itération de l'étape 110, soit à la suite d'une itération précédente de l'étape 110 pour les itérations suivantes.

L'étape 112 consiste essentiellement à déterminer une racine $\Sigma$ de $P_{a,k}$ au sens de $P_{a,k} = \Sigma \Sigma^T$, par exemple en utilisant une factorisation de Cholesky. On note $\Sigma_i$ la ième colonne de la matrice $\Sigma$ qui a L lignes et L colonnes.

L'étape 113 consiste essentiellement à générer un ensemble de 2L+1 points appelés sigma-points, dans un espace de dimension L.

Un sigma point central $X_{a,k}^0$ a pour coordonnées les composantes du vecteur d'état augmenté $\overline{x}_{a,k}$. A chaque colonne $\Sigma_i$ de la racine de $P_{a,k}$ correspond un couple de sigma points $[X_{a,k}^i, X_{a,k}^{i+L}]$ centrés sur le sigma point central $X_{a,k}^0$. Les coordonnées de sigma points sont calculées au moyen des formules :

$$X_{a,k}^{i} = \overline{x}_{a,k} + \sqrt{L+\lambda}.\Sigma_i$$

$$X_{a,k}^{i+L} = \overline{x}_{a,k} - \sqrt{L+\lambda}.\Sigma_i$$

L'ensemble prédictif de sigma points généré en étape 110 est utilisé en étape 120 pour obtenir un gain de filtre bayésien, notamment de filtre de Kalman $K_k$ à l'instant courant k de la manière expliquée à présent. D'autres filtres bayésiens peuvent être utilisés comme par exemple les filtres particulaires.

On peut détailler l'étape 120 en six étapes 121, 122, 123, 124, 125, 126.

L'étape 121 consiste essentiellement à lire le vecteur $U_k$ des entrées du modèle telles qu'elles sont effectivement mesurées à l'instant courant k.

Dans l'étape 122, chaque sigma point $X_{a,k}^{i}$ généré dans l'étape 110 est assimilé à un vecteur d'état augmenté possible permettant de prédire une valeur $Y_k^{i}$ de vecteur de sortie du modèle correspondant aux valeurs mesurées du vecteur $U_k$ d'entrée du modèle au moyen de la formule :

$$Y_k^{i} = g_a(X_{a,k}^{i}, U_k)$$

$$g_a(X_{a,k}^{i}, U_k) = \begin{bmatrix} x_{3,k}^{i} \\ -x_{1,k}^{i} + 2x_{2,k}^{i} - K_{p,k}^{i}\theta_{far} \end{bmatrix}$$

Dans l'exemple illustré par le modèle cybernétique de la figure 5 :

où $x_{1,k}^{i}, x_{2,k}^{i}, x_{3,k}^{i}, K_{p,k}^{i}$, appartiennent aux coordonnées du sigma point $X_{a,k}^{i}$ et où $\theta_{far}$ appartient au vecteur $U_k$ des entrées du modèle.

Le nombre Q de composantes du vecteur de sortie, est ici égal à 2 parce que dans l'exemple illustré par le modèle cybernétique de la figure 5, on observe deux sorties scalaires qui sont le couple $\Gamma_d$ appliqué par le conducteur sur le volant et l'angle $\delta_{sw}$ d'intention du conducteur de tourner le volant. Le nombre Q de composantes peut tout à fait être différent de 2 sans sortir du cadre de l'invention. Le nombre Q est inférieur à 2 si on n'observe que le couple $\Gamma_d$ appliqué par le conducteur sur le volant. Le nombre Q est supérieur à 2 si on observe non seulement le couple $\Gamma_d$ appliqué par le conducteur sur le volant et l'angle $\delta_{sw}$ d'intention du conducteur de tourner le volant mais aussi d'autres actions du conducteur comme l'appui sur la pédale d'accélérateur ou autre.

L'étape 123 consiste à générer une valeur estimée $\overline{y}_k$ de vecteur de sortie, égale à une somme des valeurs de sortie $Y_k^{i}$ prédites du modèle, pondérée par les coefficients $W_i^{P}$ de pondération mentionnés lors des explications de l'étape 100 :

$$\overline{y}_k = \sum_{i=0}^{2L} W_i^{P} Y_k^{i}$$

De la sorte, le premier ensemble prédictif $\{X_{a,k}^{i}\}_{i=0}^{2L}$ de 2L+1 sigma points, obtenu par expansion autour du singleton $\{X_{a,k}^{0}\}$ qui donne une valeur moyenne correspondant au vecteur d'état augmenté $\overline{x}_{a,k}$ prédit, induit un deuxième ensemble prédictif $\{Y_k^{i}\}_{i=0}^{2L}$ de 2L+1 sigma points, chacun correspondant à un vecteur de sortie du modèle induit par un point du premier ensemble prédictif de sigma points. La compression du deuxième ensemble prédictif $\{Y_k^{i}\}_{i=0}^{2L}$ de sigma points donne alors la valeur moyenne $\overline{y}_k$, correspondant à une valeur la plus probable du vecteur de sortie qu'il convient d'estimer à partir du vecteur d'état augmenté $\overline{x}_{a,k}$ et du vecteur $U_k$ des entrées mesurées.

Les valeurs de sortie $Y_k^i$ du modèle et la valeur estimée $\bar{y}_k$ de vecteur de sortie permettent de calculer une matrice $P_{xy,k}$ de covariance croisée entre les états donnés par le premier ensemble prédictif de sigma points et les valeurs de sortie $Y_k^i$ du modèle dans une étape 124, et de calculer une matrice $P_{yy,k}$ de covariance sur les valeurs de sortie $Y_k^i$ du modèle dans une étape 125.

En relation avec l'une quelconque des étapes 124, 125, pour chaque point du premier ensemble prédictif de sigma points, on génère un vecteur d'écart d'état $\left[X_{a,k}^i - \bar{x}_{a,k}\right]$ relatif au vecteur d'état augmenté $\bar{x}_{a,k}$ prédit à L composantes et un vecteur d'écart de sortie $\left[Y_k^i - \bar{y}_k\right]$ relatif à la valeur estimée $\bar{y}_k$ à Q composantes,

Dans l'étape 124, chaque produit du vecteur d'écart d'état par la transposée du vecteur d'écart de sortie correspondant donne une matrice à L lignes et Q colonnes. La somme pondérée par les coefficients $W_i^P$ des 2L+1 matrices ainsi obtenues donne la matrice $P_{xy,k}$ de covariance croisée entre états et sorties.

Dans l'étape 125, chaque produit du vecteur d'écart de sorties par la transposée du vecteur d'écart de sortie correspondant donne une matrice à Q. lignes et Q colonnes. On ajoute alors la matrice $R_a$ de covariance de bruit de mesure des sorties à la somme pondérée par les coefficients $W_i^P$ des 2L+1 matrices ainsi obtenues pour donner la matrice $P_{yy,k}$ de covariance croisée sur les sorties.

L'étape 126 consiste alors à générer une valeur de gain de Kalman $K_k$ à l'instant k en multipliant la matrice $P_{xy,k}$ de covariance croisée entre états et sorties par l'inverse de la matrice $P_{yy,k}$ de covariance sur les sorties. Notons à ce sujet que le gain de Kalman est ici une matrice à L lignes et à Q colonnes.

L'étape 130 consiste essentiellement à recadrer le vecteur d'état augmenté sur une valeur optimisée pour conduire aux valeurs de sortie effectivement mesurées, et ceci au moyen du gain de Kalman généré par l'étape 120. On peut détailler l'étape 130 en deux étapes 131,132.

L'étape 131 consiste essentiellement à lire le vecteur $z_k$ des sorties du modèle telles qu'elles sont effectivement mesurées à l'instant courant k.

Dans l'étape 132, la différence à l'instant k entre le vecteur $z_k$ des sorties mesurées et la valeur estimée $\bar{y}_k$ du vecteur des sorties à Q composantes, est multiplié par le gain de Kalman $K_k$ à l'instant k dont le résultat qui est un vecteur à L composantes, est ajouté au vecteur d'état augmenté $\bar{x}_{a,k}$ prédit pour l'instant k, pour obtenir un vecteur d'état augmenté $\bar{x}_{a,k}^{opt}$ optimal, compte tenu du vecteur $U_k$ des entrées mesurées et du vecteur $z_k$ des sorties mesurées. Le produit de la matrice $P_{xy,k}$ de covariance croisée par la transposée du gain de Kalman $K_k$, est retranché de la matrice $P_{a,k}$ de covariance de la prédiction d'état, pour obtenir une matrice optimale $P_{a,k}^{opt}$ de covariance de la prédiction d'état.

Une étape 140 a pour but de vérifier en permanence la stabilité des paramètres du modèle cybernétique compris dans la partie augmentée du vecteur d'état augmenté $\bar{x}_{a,k}^{opt}$ optimal, en d'autres termes des composantes du vecteur d'état augmenté optimal qui ne sont pas des états temporels du modèle cybernétique. Dans une première phase après démarrage du véhicule, une variation des valeurs du vecteur Π de paramètres traduit une adaptation des paramètres du modèle cybernétique au comportement du conducteur, de nature avantageusement automatique. Une stabilisation des valeurs des paramètres est ensuite représentative du comportement du conducteur ou en d'autres termes de son état de vigilance, de fatigue ou de distraction qui influent sur sa façon de réagir aux événements extérieur. Pour un comportement, c'est-à-dire un état donné du conducteur, les paramètres du modèle sont fixés et ce sont uniquement les variations de l'environnement perçu qui font varier les actions en sorties. Dans une deuxième phase, après stabilisation des valeurs du vecteur Π de paramètres, une variation des valeurs du vecteur Π de paramètres traduit une adaptation des paramètres du modèle cybernétique à un comportement différent du conducteur, en d'autres termes à une modification de comportement, passage de son état de vigilance normal à un état d'énervement, de fatigue ou de distraction et réciproquement. On peut prévoir de lever un drapeau numérique associé à une première détection de stabilité selon un critère $C_k$ dans l'étape 140, de sorte que seules les détections suivantes d'instabilité déclarent un changement de comportement du conducteur après avoir levé le drapeau numérique.

Une variante possible de réalisation de l'étape 140, peut par exemple se détailler en sept étapes 141, 142, 143, 144, 145, 146,147.

L'étape 141 consiste essentiellement à affecter la valeur du vecteur de paramètre $Π_k$, contenue précédemment

en mémoire pour l'instant courant k, au vecteur de paramètre $\Pi_{k-1}$, pour l'instant précédent k-1.

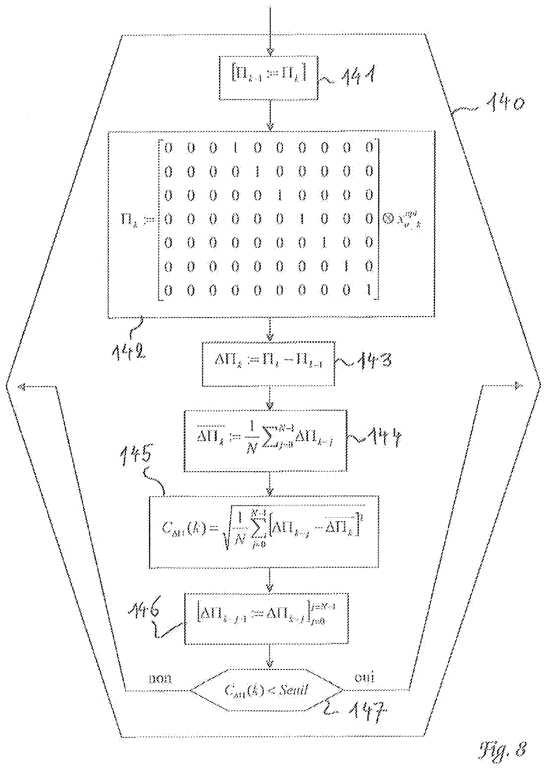

L'étape 142 consiste essentiellement à générer une nouvelle valeur du vecteur de paramètre $\Pi_k$, à partir du vecteur d'état augmenté $\overline{x}_{a,k}^{opt}$ optimal. L'étape 142 illustrée sur la figure 8 présente un vecteur de paramètre $\Pi_k$ extrait du vecteur d'état augmenté $\overline{x}_{a,k}^{opt}$ optimal au moyen d'une matrice à coefficients majoritairement nul sauf à valoir 1 au croisement de la colonne correspondant à l'ordre d'une composante du vecteur de paramètre $\Pi_k$ et de la ligne correspondant à l'ordre de la composante du vecteur d'état augmenté $\overline{x}_{a,k}^{opt}$ optimal qui reproduit la valeur de paramètre de ladite composante du vecteur de paramètre $\Pi_k$. On comprendra que d'autres méthodes d'extraction sont possibles comme par exemple celle consistant à utiliser un double pointeur se déplaçant d'une part sur les composantes du vecteur de paramètre $\Pi_k$ et d'autre part sur les composantes du vecteur d'état augmenté $\overline{x}_{a,k}^{opt}$ optimal qui reproduisent une valeur de paramètre et non pas une valeur d'état temporel du modèle cybernétique.

L'étape 143 consiste essentiellement à calculer une variation courante $\Delta\Pi_k$ entre la valeur du vecteur de paramètre $\Pi_k$ à l'instant courant et la valeur du vecteur de paramètre $\Pi_{k-1}$ à l'instant précédent. De préférence, la variation courante s'applique à une composante à la fois du vecteur de paramètres. En d'autres termes on observe pour chacun d'un ou plusieurs paramètres, individuellement sa variation.

L'étape 144 consiste essentiellement à calculer une moyenne arithmétique $\overline{\Delta\Pi_k}$ de la variation courante $\Delta\Pi_k$ et de N-1 variations $\Delta\Pi_{k-j}$ précédentes. On effectue ainsi une moyenne sur une fenêtre glissante à N éléments.

L'étape 145 consiste essentiellement à calculer un écart type $C_{\Delta\Pi}(k)$ (standard deviation en anglais) de la variation courante $\Delta\Pi_k$ et des N-1 variations $\Delta\Pi_{k-j}$ précédentes. La dispersion donnée par l'écart type $C_{\Delta\Pi}(k)$, est représentative d'un niveau de fluctuation des variations du vecteur de paramètre $\Pi$, d'autant plus élevé que le comportement du conducteur est instable.

L'étape 147 consiste alors à déclarer stable un degré de stabilité $C_k$ lorsque l'écart type $C_{\Delta\Pi}(k)$ est inférieur à un seuil prédéterminé. La valeur du seuil est prédéterminée par exemple expérimentalement sur un échantillon de conducteurs statistiquement représentatif, en mettant ces conducteurs dans divers états de distraction possibles. Le critère de stabilité $C_k$ est déclaré instable lorsque l'écart type $C_{\Delta\Pi}(k)$ est supérieur ou égal au seuil prédéterminé. Lorsqu'on observe un seul paramètre, un seuil suffit. Lorsqu'on observe plusieurs paramètres, en d'autres termes plusieurs composantes du vecteur de paramètre, il existe un seuil pour chaque paramètre, identique ou non à un autre seuil. La comparaison est faite pour chaque paramètre observé.

Préalablement à l'étape 147 qui termine l'étape 140, une étape 146 est utile pour décaler d'un rang vers les instants antérieurs, les variations $\Delta\Pi_{k-j}$ du vecteur de paramètre.

Lorsque le degré de stabilité $C_k$ est celui d'une instabilité, une étape 150 a pour rôle de signaler un changement de comportement du conducteur, par exemple pour émettre une alarme en vue d'alerter le conducteur, voire pour déclencher des actions de sauvegarde en cas de changement de comportement source de danger telles qu'un ralentissement du véhicule ou allumage des feux de détresse.

A la suite de l'étape 150 ou directement à la suite de l'étape 140 si le degré de stabilité $C_k$ est déclaré stable, une étape 160 utilise à nouveau la méthode de calcul, connue sous le nom de transformée «Unscented».

Le vecteur d'état augmenté $\overline{x}_{a,k}^{opt}$ optimal est vu dans l'étape 160 comme une variable aléatoire $X_{a,k}^{opt}$ de dimension L, de moyenne $\overline{x}_{a,k}^{opt}$ et de covariance $P_{a,k}^{opt}$, qui subit une transformation non linéaire de la forme $X_{a,k+1}^{opt} = f_a(X_{a,k}^{opt}, U_k)$. La transformée unscented permet maintenant de prédire une valeur moyenne $\overline{x}_{a,k+1}$ du vecteur d'état augmenté à l'instant ultérieur k+1, ainsi qu'une valeur $P_{a,k+1}$ de la matrice de covariance de la prédiction d'état.

On peut détailler l'étape 160 en deux étapes 161, 162.

L'étape 161 consiste essentiellement à déterminer une racine $\Sigma^{opt}$ de $P_{a,k}^{opt}$, c'est-à-dire une matrice $\Sigma^{opt}$ vérifiant la relation $\Sigma^{opt}(\Sigma^{opt})^T = P_{a,k}^{opt}$ par exemple en utilisant une factorisation de Cholesky. On note $\Sigma_i^{opt}$ la ième colonne de la matrice $\Sigma^{opt}$ qui a L lignes et L colonnes de composantes.

L'étape 162 consiste essentiellement à générer un ensemble de 2L+1 points appelés sigma-points, dans un espace de dimension L.

Un sigma point central $X_{a,k}^{opt,0}$ a pour coordonnées les composantes du vecteur d'état augmenté $\overline{x}_{a,k}^{opt}$. A chaque colonne $\Sigma_i^{opt}$ de la racine de $P_{a,k}^{opt}$ correspond un couple de sigma points $[X_{a,k}^{opt,i}, X_{a,k}^{opt,i+L}]$ centrés sur le sigma point central $X_{a,k}^{opt,0}$. Les coordonnées de sigma points sont calculées au moyen des formules :

$$X_{a,k}^{opt,i} = \overline{x_{a,k}^{opt}} + \sqrt{L + \lambda}.\Sigma_i^{opt}$$

$$X_{a,k}^{opt,i+L} = \overline{x_{a,k}^{opt}} - \sqrt{L + \lambda}.\Sigma_i^{opt}$$

L'ensemble optimal de sigma points ainsi généré en étape 160 est utilisé en étape 170 pour anticiper un vecteur d'état augmenté $\overline{x}_{a,k+1}$ à l'instant suivant k+1 de la manière expliquée à présent.

On peut détailler l'étape 170 en cinq étapes 171, 172, 173, 174, 175.

Le résultat de l'étape 121 qui consiste essentiellement à lire le vecteur $U_k$ des entrées du modèle telles qu'elles sont effectivement mesurées à l'instant courant k, est réutilisé ici.

Dans l'étape 172, chaque sigma point $X_{a,k}^{opt,i}$ généré dans l'étape 160 est assimilé à un vecteur d'état augmenté possible permettant de prédire une valeur $X_{a,k+1}^i$ de vecteur d'état augmenté futur du modèle correspondant aux valeurs mesurées du vecteur $U_k$ d'entrée du modèle au moyen de la formule :

$$X_{k+1}^{opt,i} = f_a(X_{a,k}^{opt,i}, U_k)$$

Dans l'exemple illustré par le modèle cybernétique de la figure 5 :

$$f_a(X_{a,k}^{opt,i}, U_k) = \begin{bmatrix} x_{1,k}^{opt,i} + T*(\frac{-1}{T_{1,k}^{opt,i}}x_{1,k}^{opt,i} + \frac{K_{c,k}^{opt,i}}{v \cdot T_{1,k}^{opt,i}}\theta_{near}) \\ x_{2,k}^{opt,i} + T*(\frac{2}{\tau_{p,k}^{opt,i}}((x_{1,k}^{opt,i} - x_{2,k}^{opt,i}) + K_{p,k}^{opt,i}\theta_{far})) \\ x_{3,k}^{opt,i} + \frac{-T}{T_{n,k}^{opt,i}}*((K_{r,k}^{opt,i} \cdot v + K_{t,k}^{opt,i})(x_{1,k}^{opt,i} - 2 \cdot x_{2,k}^{opt,i}) + x_{3,k}^{opt,i} + K_{t,k}^{opt,i} \cdot \delta_d + \Gamma_s) \\ K_{p,k}^{opt,i} \\ K_{c,k}^{opt,i} \\ T_{1,k}^{opt,i} \\ \tau_{p,k}^{opt,i} \\ K_{r,k}^{opt,i} \\ K_{t,k}^{opt,i} \\ T_{n,k}^{opt,i} \end{bmatrix}$$

où $x_{1,k}^{opt,i}$, $x_{2,k}^{opt,i}$, $x_{3,k}^{opt,i}$, $K_{p,k}^{opt,i}$, $K_{c,k}^{opt,i}$, $T_{1,k}^{opt,i}$, $\tau_{p,k}^{opt,i}$, $K_{r,k}^{opt,i}$, $K_{t,k}^{opt,i}$, $T_{n,k}^{opt,i}$, appartiennent aux coordonnées du sigma point $X_{a,k}^{opt,i}$, où $\theta_{far}$, $\theta_{near}$, $\Gamma_s$, $\delta_d$, v appartiennent au vecteur $U_k$ des entrées du modèle et où T désigne la période d'échantillonnage.

Le nombre L de composantes du vecteur anticipé, est ici égal à 10 parce que dans l'exemple illustré par le modèle cybernétique de la figure 5, on observe trois états temporels et sept paramètres du modèle. Le nombre L de composantes peut tout à fait être différent de 10 sans sortir du cadre de l'invention. Le nombre L est inférieur à 3 si on n'observe qu'un seul état temporel et un seul paramètre du modèle. Le nombre L est supérieur à 3, voire à 10 si on observe plus d'états internes et plus de paramètres du modèle.

L'étape 173 consiste à générer une valeur anticipée ou prédite $\bar{x}_{a,k+1}$ de vecteur d'état augmenté, égale à une somme des valeurs de sigma points $X_k^{opt,i}$, pondérée par les coefficients $W_i^P$ de pondération mentionnés lors des explications de l'étape 100 :

$$\bar{x}_{a,k+1} = \sum_{i=0}^{2L} W_i^P X_{a,k+1}^i$$

De la sorte, le premier ensemble optimal $\left\{X_{a,k}^{opt,i}\right\}_{i=0}^{2L}$ de 2L+1 sigma points, obtenu par expansion autour du singleton $\left\{X_{a,k}^{opt,0}\right\}$ qui donne une valeur moyenne correspondant au vecteur d'état augmenté $\bar{x}_{a,k}^{opt}$ optimal, induit un deuxième ensemble optimal $\left\{X_{a,k+1}^i\right\}_{i=0}^{2L}$ de 2L+1 sigma points, chacun correspondant à un vecteur d'état augmenté futur possible du modèle induit par un point du premier ensemble optimal de sigma points. La compression du deuxième ensemble optimal $\left\{X_{a,k+1}^i\right\}_{i=0}^{2L}$ de sigma points donne alors la valeur moyenne $\bar{x}_{a,k+1}$ correspondant à une valeur la plus probable du vecteur d'état augmenté à l'instant suivant k+1 qu'il convient d'estimer à partir du vecteur d'état augmenté optimal_ $\bar{x}_{a,k}^{opt}$ et du vecteur $U_k$ des entrées mesurées à l'instant courant k.

Les valeurs possibles d'états $X_{a,k+1}^i$ du modèle et la valeur estimée $\bar{x}_{a,k+1}$ de vecteur de d'état augmenté à l'instant suivant k+1 permettent de calculer une matrice estimée $\tilde{P}_{a,k+1}$ de covariance sur les valeurs possibles d'états $X_{a,k+1}^i$ du modèle dans une étape 174.

En relation avec l'étape 174, pour chaque point du premier ensemble optimal de sigma points, on génère un vecteur d'écart d'état $\left[X_{a,k+1}^i - \bar{x}_{a,k+1}\right]$ relatif au vecteur d'état augmenté $\bar{x}_{a,k+1}$ prédit à L composantes.

Dans l'étape 174, chaque produit du vecteur d'écart de sorties par la transposée du vecteur d'écart de sortie correspondant donne une matrice à L lignes et L colonnes. La somme pondérée par les coefficients $W_i^P$ des 2L+1 matrices ainsi obtenues donne alors la matrice $\tilde{P}_{a,k+1}$ de covariance sur les états anticipés ou prédits pour l'instant suivant k+1.

L'étape 175 consiste alors à générer une valeur de matrice de covariance $P_{a,k+1}$ pour réitérer à l'instant k+1 suivant les étapes ci-dessus exposées. La matrice de covariance $P_{a,k+1}$ est obtenue en multipliant la matrice $\tilde{P}_{a,k+1}$ par un facteur d'oubli M/M-1 avec M>1, ou ce qui revient au même par M+1/M avec M>0. Notons à ce sujet que la matrice de covariance $P_{a,k+1}$ est ici une matrice symétrique à L lignes et à L colonnes.

L'étape 170 reboucle ensuite sur l'étape 110 pour une nouvelle itération du procédé à l'instant suivant.

L'invention ne se limite pas au modèle particulier exposé ci-dessus à titre purement illustratif et qui ne constitue pas en lui-même un élément de l'invention.

L'exposé du procédé, du dispositif et du véhicule ci-dessus exposé a le mérite de montrer l'avantage de l'invention par rapport aux procédés, dispositifs et véhicules antérieurement connus.

Par rapport aux systèmes industriels antérieurs basés sur une mesure indirecte comme celle de l'angle volant, le diagnostic repose ici davantage sur les lois physiques liées au comportement du conducteur que sur des aprioris physiques qui ne sont pas vrais pour l'ensemble des conducteurs ou pour toutes les situations d'utilisation.

Par rapport aux approches qui reposent sur une mesure directe, la réalisation de l'invention ne nécessite pas de rajout de capteurs supplémentaires et spécifiques. Les capteurs qui sont utilisés par d'autres systèmes d'aide à la conduite (ADAS pour Advanced Driver Assistance System en anglais) peuvent être utilisés.

**Revendications**

1. Procédé de détection d'un changement de comportement de conducteur d'un véhicule automobile au moyen d'un modèle cybernétique défini par un premier vecteur (U) de mesure en relation avec au moins une entrée connectée à un instrument de mesure pour quantifier une donnée sensorimotrice en relation avec le conducteur, par un vecteur (Y) de sortie comportant au moins une sortie pour estimer une donnée actionnelle produite par le conducteur, par un vecteur (Π) de paramétrage comportant au moins un paramètre pour quantifier une donnée physiologique du conducteur, et par un vecteur (X) d'état temporel comportant au moins un état temporel dudit modèle, **caractérisé en ce qu'**il comprend des étapes exécutées en temps réel pour :

   - calculer (130) au moins une valeur courante $(\overline{x}^{opt}_{a,k})$ optimale d'un vecteur (Xₐ) d'état augmenté à un instant présent (k) en fonction d'au moins une valeur précédemment estimée $(\overline{x}_{a,k})$ dudit vecteur (Xₐ) d'état augmenté et d'un deuxième vecteur ($z_k$) de mesure en relation avec ledit vecteur (Y) de sortie, ledit vecteur (Xₐ) d'état augmenté comportant au moins une composante reproduisant une composante du vecteur (X) d'état temporel et au moins une composante reproduisant une composante du vecteur (Π) de paramétrage ;

   - évaluer (140) un degré de stabilité C(k) d'au moins une composante de valeur courante $(\overline{x}^{opt}_{a,k})$ du vecteur (Xₐ) d'état augmenté qui reproduit ladite au moins une composante du vecteur (Π) de paramétrage ;

   - signaler (150) un changement de comportement de conducteur lorsque ledit degré de stabilité C(k) est significatif d'une instabilité.

2. Procédé selon la revendication 1, **caractérisé en ce qu'**il comprend des étapes exécutées en temps réel pour :

   - calculer (120) un gain ($K_k$) de filtre bayésien à partir de la valeur précédemment estimée $(\overline{x}_{a,k})$ dudit vecteur (Xₐ) d'état augmenté et dudit premier vecteur (U) de mesure, le gain ($K_k$) de filtre bayésien constituant un moyen technique de calcul de valeur courante $(\overline{x}^{opt}_{a,k})$ du vecteur (Xₐ).

3. Procédé selon la revendication 2, **caractérisé en ce qu'**il comprend des étapes exécutées en temps réel pour :

   - générer (110) un premier ensemble prédictif de sigma points $(X^i_{a,k})$ associés au vecteur (Xₐ) d'état augmenté, centrés sur la valeur précédemment estimée ($x_{a,k}$) dudit vecteur (Xₐ) d'état augmenté au moyen d'une matrice prédictive ($P_{a,k}$) de covariance d'états statistiquement possibles ;

   - calculer (122) un deuxième ensemble prédictif de sigma points $(Y^i_k)$ associés au vecteur (Y) de sortie à l'instant présent (k) en fonction du premier ensemble prédictif de sigma points $(X^i_{a,k})$ et dudit vecteur ($U_k$) de mesure ;

   - calculer (126) le gain ($K_k$) de filtre bayésien à partir du deuxième ensemble prédictif de sigma points $(Y^i_k)$.

4. Procédé selon l'une des revendications précédentes, **caractérisé en ce qu'**il comprend des étapes exécutées en temps réel pour :

   - calculer (170) une valeur future estimée $(\overline{x}_{a,k+1})$ dudit vecteur (Xₐ) d'état augmenté à un instant suivant (k+1) à partir de la valeur courante $(\overline{x}^{opt}_{a,k})$ optimale dudit vecteur (Xₐ) d'état augmenté et dudit premier vecteur (U) de mesure.

5. Procédé selon la revendication précédente, **caractérisé en ce qu'**il comprend des étapes exécutées en temps réel pour :

   - générer (160) un premier ensemble optimal de sigma points $(X^{opt,i}_{a,k})$ associés au vecteur (Xₐ) d'état augmenté, centrés sur la valeur courante $(\overline{x}^{opt}_{a,k})$ optimale dudit vecteur (Xₐ) d'état augmenté au moyen d'une matrice optimale $\left( P_{a,k}^{opt} \right)$ de covariance d'états statistiquement possibles ;

- calculer (172) un deuxième ensemble optimal de sigma points $\left( X_{a,k+1}^{i} \right)$ associés au vecteur ($X_a$) d'état augmenté à l'instant suivant (k+1) en fonction du premier ensemble optimal de sigma points $\left( X_{a,k}^{opt,i} \right)$ et dudit vecteur ($U_k$) de mesure ;

- calculer (173) la valeur future estimée $\left( \overline{x}_{a,k+1} \right)$ dudit vecteur ($X_a$) à partir du deuxième ensemble optimal de sigma points $\left( X_{a,k+1}^{i} \right)$.

6. Procédé selon l'une des revendications précédentes **caractérisé en ce que** l'étape pour évaluer (140) ledit degré de stabilité C(k) comprend des étapes consistant à :

- obtenir (142) une valeur ($\Pi_k$) du vecteur de paramétrage à partir du vecteur ($X_a$) d'état augmenté à l'instant présent ;
- calculer (144) une évolution de paramètres ($\Delta\Pi_k$) à partir de la valeur ($\Pi_k$) à l'instant présent et d'une valeur ($\Pi_{k-1}$) à l'instant précédent du vecteur de paramétrage ;
- mémoriser (146) dans un registre à décalage ladite évolution de paramètres ($\Delta\Pi_k$) de manière à obtenir une quantité (N) d'évolutions antérieures de paramètres ;
- calculer (145) un écart type ($C_{\Delta\Pi}$) sur ladite quantité (N) d'évolutions ;
- signifier (147) une instabilité dudit degré de stabilité C(k) lorsque ledit écart type ($C_{\Delta\Pi}$) n'est pas inférieur à un seuil prédéterminé.

7. Programme d'ordinateur comprenant des instructions de code de programme pour l'exécution des étapes du procédé selon l'une des revendications 1 à 6 lorsque ledit programme est exécuté sur un ordinateur.

8. Dispositif de détection d'un changement de comportement de conducteur d'un véhicule automobile comprenant une unité de post traitement (10) connectée à un ou plusieurs instruments de mesure (6, 8) pour quantifier une ou plusieurs données sensorimotrices en relation avec le conducteur, une unité de calcul (11) connectée à l'unité de post traitement (10) et hébergée dans un ordinateur embarqué qui comporte en mémoire un modèle cybernétique défini par un vecteur (U) de mesure comportant au moins une entrée, par un vecteur (Y) de sortie comportant au moins une sortie pour estimer une donnée actionnelle produite par le conducteur, par un vecteur ($\Pi$) de paramétrage comportant au moins un paramètre pour quantifier une donnée physiologique du conducteur, et par un vecteur (X) d'état temporel comportant au moins un état temporel dudit modèle, **caractérisé en ce qu'**il comprend en mémoire un programme selon la revendication 7 et un processeur pour exécuter en temps réel ledit programme.

9. Véhicule comprenant un dispositif selon la revendication 8.

**Patentansprüche**

1. Verfahren zur Erkennung einer Änderung des Verhaltens eines Fahrers eines Kraftfahrzeugs mittels eines kybernetischen Modells, das definiert ist durch einen ersten Messvektor (U), der mit wenigstens einem Eingang im Zusammenhang steht, der mit einem Messinstrument zum Quantifizieren einer mit dem Fahrer zusammenhängenden sensomotorischen Größe verbunden ist, durch einen Ausgangsvektor (Y), der wenigstens einen Ausgang zum Schätzen einer von dem Fahrer erzeugten aktionsbezogenen Größe aufweist, durch einen Parametrierungsvektor ($\Pi$), der wenigstens einen Parameter zum Quantifizieren einer physiologischen Größe des Fahrers aufweist, und durch einen zeitlichen Zustandsvektor (X), der wenigstens einen zeitlichen Zustand des Modells aufweist, **dadurch gekennzeichnet, dass** es folgende in Echtzeit ausgeführte Schritte umfasst:

- Berechnen (130) wenigstens eines optimalen aktuellen Wertes $\left( \overline{x}_{a,k}^{opt} \right)$ eines vergrößerten Zustandsvektors ($X_a$) zu einem gegenwärtigen Zeitpunkt (k) in Abhängigkeit von wenigstens einem vorher geschätzten Wert $\left( \overline{x}_{a,k} \right)$ des vergrößerten Zustandsvektors ($X_a$) und von einem zweiten Messvektor ($z_k$), der mit dem Ausgangsvektor (Y) im Zusammenhang steht, wobei der vergrößerte Zustandsvektor ($X_a$) wenigstens eine Komponente, die eine Komponente des zeitlichen Zustandsvektors (X) wiedergibt, und wenigstens eine Komponente, die eine Komponente des Parametrierungsvektors ($\Pi$) wiedergibt, aufweist;

- Bewerten (140) eines Stabilitätsgrades C(k) wenigstens einer Komponente des aktuellen Wertes $(\overline{x}_{a,k}^{opt})$ des vergrößerten Zustandsvektors ($X_a$), welche die wenigstens eine Komponente des Parametrierungsvektors ($\Pi$) wiedergibt;
- Signalisieren (150) einer Änderung des Verhaltens des Fahrers, wenn der Stabilitätsgrad C(k) kennzeichnend für eine Instabilität ist.

2. Verfahren nach Anspruch 1, **dadurch gekennzeichnet, dass** es folgende in Echtzeit ausgeführte Schritte umfasst:

- Berechnen (120) eines Verstärkungsfaktors ($K_k$) eines Bayesschen Filters aus dem vorher geschätzten Wert $(\overline{x}_{a,k})$ des vergrößerten Zustandsvektors ($X_a$) und dem ersten Messvektor (U), wobei der Verstärkungsfaktor ($K_k$) des Bayesschen Filters ein technisches Mittel zur Berechnung des aktuellen Wertes $(\overline{x}_{a,k}^{opt})$ des Vektors ($X_a$) darstellt.

3. Verfahren nach Anspruch 2, **dadurch gekennzeichnet, dass** es folgende in Echtzeit ausgeführte Schritte umfasst:

- Erzeugen (110) einer ersten prädiktiven Menge von Sigma-Punkten $(X_{a,k}^i)$, die dem vergrößerten Zustands-vektor ($X_a$) zugeordnet sind und um den vorher geschätzten Wert $(\overline{x}_{a,k})$ des vergrößerten Zustandsvektors ($X_a$) zentriert sind, mittels einer prädiktiven Kovarianzmatrix ($P_{a,k}$) von statistisch möglichen Zuständen;

- Berechnen (122) einer zweiten prädiktiven Menge von Sigma-Punkten $(Y_k^i)$, die dem Ausgangsvektor (Y) zum gegenwärtigen Zeitpunkt (k) zugeordnet sind, in Abhängigkeit von der ersten prädiktiven Menge von Sigma-Punkten $(X_{a,k}^i)$ und dem Messvektor ($U_k$) ;
- Berechnen (126) des Verstärkungsfaktors ($K_k$) des Bayesschen Filters aus der zweiten prädiktiven Menge von Sigma-Punkten $(Y_k^i)$.

4. Verfahren nach einem der vorhergehenden Ansprüche, **dadurch gekennzeichnet, dass** es folgende in Echtzeit ausgeführte Schritte umfasst:

- Berechnen (170) eines geschätzten zukünftigen Wertes $(\overline{x}_{a,k+1})$ des vergrößerten Zustandsvektors ($X_a$) zu einem folgenden Zustand (k+1) aus dem optimalen aktuellen Wert $(\overline{x}_{a,k}^{opt})$ des vergrößerten Zustandsvektors ($X_a$) und dem ersten Messvektor (U).

5. Verfahren nach dem vorhergehenden Anspruch, **dadurch gekennzeichnet, dass** es folgende in Echtzeit ausgeführte Schritte umfasst:

- Erzeugen (160) einer ersten optimalen Menge von Sigma-Punkten $(X_{a,k}^{opt,i})$, die dem vergrößerten Zu-standsvektor ($X_a$) zugeordnet sind und um den optimalen aktuellen Wert $(\overline{x}_{a,k}^{opt})$ des vergrößerten Zustands-vektors ($X_a$) zentriert sind, mittels einer optimalen Kovarianzmatrix $(P_{a,k}^{opt})$ von statistisch möglichen Zuständen;

- Berechnen (172) einer zweiten optimalen Menge von Sigma-Punkten $(X_{a,k+1}^i)$, die dem vergrößerten Zustandsvektor ($X_a$) zugeordnet sind, zum folgenden Zeitpunkt (k+1) in Abhängigkeit von der ersten optimalen Menge von Sigma-Punkten $(X_{a,k}^{opt,i})$ und dem Messvektor ($U_k$) ;
- Berechnen (173) des zukünftigen Wertes $(\overline{x}_{a,k+1})$ des Vektors ($X_a$) aus der zweiten optimalen Menge von Sigma-Punkten $(X_{a,k+1}^i)$.

**6.** Verfahren nach einem der vorhergehenden Ansprüche, **dadurch gekennzeichnet, dass** der Schritt des Bewertens (140) des Stabilitätsgrades C(k) folgende Schritte umfasst:

- Gewinnen (142) eines Wertes ($\Pi_k$) des Parametrierungsvektors aus dem vergrößerten Zustandsvektor ($X_a$) zum gegenwärtigen Zeitpunkt;
- Berechnen (144) einer Änderung von Parametern ($\Delta\Pi_k$) aus dem Wert ($\Pi_k$) des Parametrierungsvektors zum gegenwärtigen Zeitpunkt und einem Wert ($\Pi_{k-1}$) desselben zum vorhergehenden Zeitpunkt;
- Speichern (146) der Änderung von Parametern ($\Delta\Pi_k$) in einem Schieberegister, um eine Anzahl (N) von früheren Änderungen von Parametern zu gewinnen;
- Berechnen (145) einer Standardabweichung ($C_{\Delta\Pi}$) für die Anzahl (N) von Änderungen;
- Anzeigen (147) einer Instabilität des Stabilitätsgrades C(k), wenn die Standardabweichung ($C_{\Delta\Pi}$) nicht kleiner als ein vorbestimmter Schwellenwert ist.

**7.** Computerprogramm, welches Programmcodeanweisungen zur Ausführung der Schritte des Verfahrens nach einem der Ansprüche 1 bis 6, wenn das Programm auf einem Computer ausgeführt wird, umfasst.

**8.** Vorrichtung zur Erkennung einer Änderung des Verhaltens eines Fahrers eines Kraftfahrzeugs, umfassend eine Nachverarbeitungseinheit (10), die mit einem oder mehreren Messinstrumenten (6, 8) zum Quantifizieren einer oder mehrerer mit dem Fahrer zusammenhängender sensomotorischer Größen verbunden ist, und eine Berechnungseinheit (11), die mit der Nachverarbeitungseinheit (10) verbunden ist und auf einem Bordcomputer gehostet wird, welcher im Speicher ein kybernetisches Modell enthält, das definiert ist durch einen Messvektor (U), der wenigstens einen Eingang aufweist, durch einen Ausgangsvektor (Y), der wenigstens einen Ausgang zum Schätzen einer von dem Fahrer erzeugten aktionsbezogenen Größe aufweist, durch einen Parametrierungsvektor ($\Pi$), der wenigstens einen Parameter zum Quantifizieren einer physiologischen Größe des Fahrers aufweist, und durch einen zeitlichen Zustandsvektor (X), der wenigstens einen zeitlichen Zustand des Modells aufweist, **dadurch gekennzeichnet, dass** sie ein Programm nach Anspruch 7 im Speicher und einen Prozessor zum Ausführen des Programms in Echtzeit umfasst.

**9.** Fahrzeug, welches eine Vorrichtung nach Anspruch 8 umfasst.

**Claims**

**1.** Method of detecting a change in the behavior of a driver of a motor vehicle by means of a cybernetic model defined by a first measurement vector (U) relating to at least one input connected to a measuring instrument to quantify a proprioception data item relating to the driver, by an output vector (Y) including at least one output for estimating an action-related data item produced by the driver, by a parameterization vector ($\Pi$) including at least one parameter for quantifying a physiological data item of the driver, and by a temporal state vector (X) including at least one temporal state of said model, **characterized in that** it comprises steps executed in real time to:

- calculate (130) at least one optimum current value $\left(\overline{x}_{a,k}^{opt}\right)$ of an augmented state vector ($X_a$) at a present time (k) as a function of at least one previously estimated value ($\overline{x}_{a,k}$) of said augmented state vector ($X_a$) and a second measurement vector ($z_k$) relating to said output vector (Y), said augmented state vector ($X_a$) including at least one component reproducing a component of the temporal state vector (X) and at least one component reproducing a component of the parameterization vector ($\Pi$);

- evaluate (140) a degree of stability C(k) of at least one current value component $\left(\overline{x}_{a,k}^{opt}\right)$ of the augmented state vector ($X_a$) that reproduces said at least one component of the parameterization vector ($\Pi$) ;
- signal (150) a change in driver behavior if said degree of stability C(k) is indicative of an instability.

**2.** Method according to Claim 1, **characterized in that** it comprises steps executed in real time to:

- calculate (120) a Bayesian filter gain ($K_k$) from the previously estimated value ($\overline{x}_{a,k}$) of said augmented state vector ($X_a$) and said first measurement vector (U), the Bayesian filter gain ($K_k$) constituting a technical means for calculating a current value $\left(\overline{x}_{a,k}^{opt}\right)$ of the vector ($X_a$) .

3. Method according to Claim 2, **characterized in that** it comprises steps executed in real time to:

   - generate (110) a first predictive set $\{X_{a,k}^i\}$ of sigma points associated with the augmented state vector $(X_a)$, centered on the previously estimated value $(\overline{x}_{a,k})$ of said augmented state vector $(X_a)$ by means of a predictive covariance matrix $(P_{a,k})$ of statistically possible states;

   - calculate (122) a second predictive set $\{Y_k^i\}$ of sigma points associated with the output vector (Y) at the present time (k) as a function of the first predictive set $\{X_{a,k}^i\}$ of sigma points and said measurement vector $(U_k)$ ;

   - calculate (126) the Bayesian filter gain $(K_k)$ from the second predictive set $\{Y_k^i\}$ of sigma points.

4. Method according to one of the preceding claims, **characterized in that** it comprises steps executed in real time to:

   - calculate (170) a future estimated value $(\overline{x}_{a,k+1})$ of said augmented state vector $(X_a)$ at a next time (k+1) from the optimum current value $\{\overline{x}_{a,k}^{opt}\}$ of said augmented state vector $(X_a)$ and said first measurement vector (U).

5. Method according to the preceding claim, **characterized in that** it comprises steps executed in real time to:

   - generate (160) a first optimum set $\{X_{a,k}^{opt,i}\}$ of sigma points associated with the augmented state vector $(X_a)$, centered on the optimum current value $\{\overline{x}_{a,k}^{opt}\}$ of said augmented state vector $(X_a)$ by means of an optimum covariance matrix $\{P_{a,k}^{opt}\}$ of statistically possible states;

   - calculate (172) a second optimum set $\{X_{a,k+1}^i\}$ of sigma points associated with the augmented state vector at the next time (k+1) as a function of the first optimum set $\{X_{a,k}^{opt,i}\}$ of sigma points and said measurement vector $(U_k)$ ;

   - calculate (173) the future estimated value $(\overline{x}_{a,k+1})$ of said vector $(X_a)$ from the second optimum set $\{X_{a,k+1}^i\}$ of sigma points.

6. Method according to one of the preceding claims, **characterized in that** the step (140) for evaluating said degree of stability C(k) comprises steps consisting in:

   - obtaining (142) a value $(\Pi_k)$ of the parameterization vector from the augmented state vector $(X_a)$ at the present time;
   - calculating (144) a parameter evolution $(\Delta\Pi_k)$ from the value $(\Pi_k)$ at the present time and a value $(\Pi_{k-1})$ at the preceding time of the parameterization vector;
   - storing (146) in a shift register said parameter evolution $(\Delta\Pi_k)$ in such a manner as to obtain a quantity (N) of previous parameter evolutions;
   - calculating (145) a standard deviation $(C_{\Delta\Pi})$ on said quantity (N) of evolutions;
   - indicating (147) an instability of said degree of stability C(k) if said standard deviation $(C_{\Delta\Pi})$ is not below a predetermined threshold.

7. Computer program comprising program code instructions for executing the steps of the method according to one of Claims 1 to 6 when said program is executed on a computer.

8. Device for detecting a change in the behavior of the driver of a motor vehicle, comprising a post-processing unit (10) connected to one or more measuring instruments (6, 8) for quantifying one or more items of proprioception data relating to the driver, a calculation unit (11) connected to the post-processing unit (10) and hosted in an onboard computer that includes in memory a cybernetic model defined by a measurement vector (U) including at least one input, by an output vector (Y) including at least one output for estimating an action data item produced by the driver, by a parameterization vector ($\Pi$) including at least one parameter for quantifying a physiological data item of the driver, and by a temporal state vector (X) including at least one temporal state of said model, **characterized in that** it comprises in memory a program according to Claim 7 and a processor for executing said program in real time.

9. Vehicle including a device according to Claim 8.

Fig. 1

$\theta_{par}$

$\theta_{near}$

14

13

*Fig. 2*

6

10

8

*Fig. 3*

$\theta_{near}$

$\theta_{par}$

$r_s$

$\delta_d$

V

9

11

Fig. 4

Fig 5

Fig. 6

Fig. 7

$$[\Pi_{k-1} := \Pi_k] \quad \text{141}$$

$$\Pi_k := \begin{bmatrix} 0 & 0 & 0 & 1 & 0 & 0 & 0 & 0 & 0 \\ 0 & 0 & 0 & 0 & 1 & 0 & 0 & 0 & 0 \\ 0 & 0 & 0 & 0 & 0 & 1 & 0 & 0 & 0 \\ 0 & 0 & 0 & 0 & 0 & 0 & 1 & 0 & 0 \\ 0 & 0 & 0 & 0 & 0 & 0 & 0 & 1 & 0 \\ 0 & 0 & 0 & 0 & 0 & 0 & 0 & 0 & 1 \\ 0 & 0 & 0 & 0 & 0 & 0 & 0 & 0 & 1 \end{bmatrix} \otimes \lambda_{\alpha',k}^{op'}$$

140

142

$$\Delta\Pi_k := \Pi_k - \Pi_{k-1} \quad \text{143}$$

$$\overline{\Delta\Pi_k} := \frac{1}{N}\sum\nolimits_{j=0}^{N-1}\Delta\Pi_{k-j} \quad \text{144}$$

145

$$C_{\Delta\Pi}(k) = \sqrt{\frac{1}{N}\sum_{j=0}^{N-1}\left[\Delta\Pi_{k-j} - \overline{\Delta\Pi_k}\right]^2}$$

146

$$\left[\Delta\Pi_{k-j-1} := \Delta\Pi_{k-j}\right]_{j=0}^{j=N-1}$$

non     $C_{\Delta\Pi}(k) < Seuil$     oui

147

*Fig. 8*

26

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0699413 A
- EP 2368496 A
- EP 1957309 A
- EP 2512340 A
- EP 2472493 A
- DE 102006060849 A
- US 8593288 B
- US 6061610 A
- EP 0952039 A